# FASCICULE DE BREVET EUROPEEN

(11) **EP 0 453 334 B1**
(45) Date de publication et mention de la délivrance du brevet: **01.12.1993**
(21) Numéro de dépôt: 91400668.9
(22) Date de dépôt: 11.03.1991
(51) Int. Cl.: F16D 3/205

(54) **Joint de transmission du type coulissant**
Verschiebbares Übertragungsgelenk
Sliding type transmission joint

(30) Priorité: 18.04.1990 FR 9004935
(43) Date de publication de la demande: 23.10.1991
(73) Titulaire: GLAENZER SPICER, F-78300 Poissy (FR)
(72) Inventeur: Poulin, Bernard, F-78700 Conflans Ste Honorine (FR); Margerie, Michel, F-95510 Vetheuil (FR)
(74) Mandataire: Polus, Camille

(56) Documents cités:
- DE-A- 2 848 125
- FR-A- 1 218 082
- US-A- 2 777 306
- PATENT ABSTRACTS OF JAPAN, vol. 11, no. 125 (M-582)[2572], 18 avril 1987;& JP-A-61 266 830 (NTN) 26-11-1986

## Description

La présente invention concerne un joint de transmission du type coulissant.

L'invention concerne plus particulièrement un joint de transmission coulissant du type dans lequel un premier élément est relié à un premier arbre et comporte des tourbillons répartis angulairement de manière régulière autour de l'axe géométrique du premier arbre, chaque tourbillon recevant un élément de roulement qui est monté tournant et coulissant sur le tourbillon, et dans lequel un second élément est relié à un second arbre et comporte des chemins de roulement répartis angulairement de manière régulière autour de l'axe géométrique du second arbre, chaque chemin de roulement comportant deux pistes parallèles entre lesquelles est reçu un des éléments de roulement.

Dans la conception la plus classique de ce type de joint, les axes géométriques des tourbillons sont perpendiculaires à l'axe du premier arbre et les axes longitudinaux centraux des chemins de roulement sont parallèles à l'axe géométrique du second arbre.

Ce type de joint peut produire, en fonctionnement sous couple et sous angle, des efforts axiaux cycliques qui se transmettent à l'ensemble de la transmission équipée de tels joints et qui sont notamment générateurs de bruits importants.

Afin de résoudre ce problème, de nombreuses solutions ont été proposées dont l'une consiste par exemple à modifier la configuration des axes longitudinaux centraux des chemins de roulement pour leur conférer une courbure dite "semi-torique".

Une telle configuration des chemins de roulement est satisfaisante lorsque le joint fonctionne au voisinage de sa position idéale de fonctionnement, mais ses qualités se dégradent dès que l'on s'éloigne de cette configuration idéale de fonctionnement, les réactions axiales engendrées pouvant alors être notamment supérieures à celles d'un joint coulissant conventionnel à pistes droites parallèles à l'axe de rotation. On constate d'autre part que lorsque l'on s'éloigne de la position idéale de fonctionnement du joint, l'effort de coulissement du joint croît rapidement pour atteindre des valeurs qui peuvent devenir inacceptables.

Cette conception connue d'un joint coulissant ne permet plus de s'adapter aux besoins des véhicules automobiles modernes car le domaine de coulissement exploitable du joint s'avère insuffisant.

Le document US-A-4.026.123 décrit et représente un joint de transmission coulissant du type mentionné plus haut dans lequel l'axe géométrique du tourillon forme un premier angle aigu par rapport à une droite de référence perpendiculaire à l'axe du premier arbre et contenue dans un plan contenant les axes géométriques du premier arbre et du tourillon, et dans lequel l'axe longitudinal central du chemin de roulement contenu dans un plan contenant l'axe géométrique du second arbre forme un deuxième angle aigu avec l'axe géométrique du second arbre.

Dans le joint de transmission objet de ce document les valeurs des angles aigus d'inclinaison des tourillons et des chemins de roulement sont très grandes, de l'ordre d'environ 45°.

Dans cette conception les efforts de coulissement du joint sont très grands, nettement supérieurs à ceux d'un joint classique et empêchent l'utilisation d'un tel joint sur un véhicule automobile moderne. Les efforts axiaux produits par un tel joint sont inadmissibles car très largement supérieurs à ceux d'un joint classique. Le domaine de coulissement exploitable de ce joint est limité et son rendement mécanique global est très faible.

La présente invention a pour but de proposer un joint de transmission du type coulissant qui, quelle que soit la position axiale relative des deux éléments du joint, possède des caractéristiques sensiblement constantes et notamment des réactions axiales minimales et une constance de l'effort de coulissement relatif des deux éléments du joint.

Dans ce but l'invention propose un joint de transmission du type coulissant dans lequel un premier élément est relié à un premier arbre et comporte des tourillons répartis angulairement de manière régulière autour de l'axe géométrique du premier arbre, chaque tourillon reçoit un élément de roulement qui est monté tournant et coulissant sur le tourillon, l'axe géométrique du tourillon forme un premier angle aigu par rapport à une droite de référence perpendiculaire à l'axe du premier arbre et contenue dans un plan contenant les axes géométriques du premier arbre et du tourillon, et dans lequel un second élément est relié à un second arbre et comporte des chemins de roulement répartis angulairement de manière régulière autour de l'axe géométrique du second arbre, chaque chemin de roulement comporte deux pistes parallèles entre lesquelles est reçu un élément de roulement, l'axe longitudinal central du chemin de roulement contenu dans un plan contenant l'axe géométrique du second arbre forme un deuxième angle aigu avec l'axe géométrique du second arbre, caractérisé en ce que la valeur de chacun desdits angles aigus est inférieure à 15°.

Selon une autre caractéristique de l'invention, lorsque le joint est dans sa position alignée dans laquelle les axes géométriques du premier arbre et du second arbre sont confondus, l'axe du tourillon forme un troisième angle par rapport à l'axe longitudinal central du chemin de roulement associé dont la valeur est différente de 90°.

D'autres caractéristiques et avantages de l'invention apparaîtront à la lecture de la description qui va suivre, donnée à titre d'exemple non limitatif, pour la compréhension de laquelle on se reportera aux dessins annexés dans lesquels :
- La figure 1 est une vue en coupe axiale d'un mode de réalisation d'un joint de transmission coulissant conforme aux enseignements de l'invention ;
- la figure 2 est un schéma illustrant l'agencement géométrique des axes des différents composants du joint représenté à la figure 1, et
- la figure 3 est une vue similaire à celle de la figure 1 d'un second mode de réalisation de l'invention.

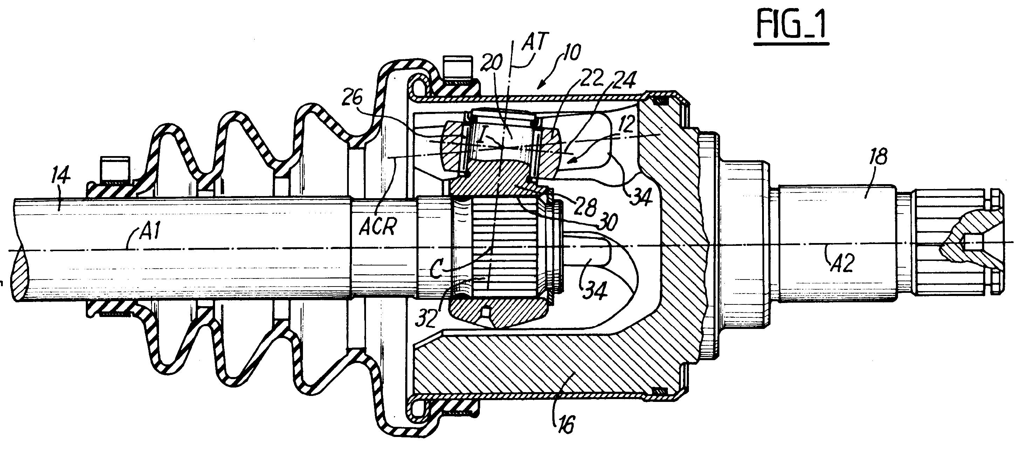

On reconnaît à la figure 1 un joint de transmission 10 du type coulissant comportant un tripode 12 relié à un premier arbre 14 et un corps ou barillet 16 relié à un second arbre 18.

Le joint 10 est représenté à la figure 1 dans sa position alignée dans laquelle l'axe géométrique A1 du premier arbre 14 est confondu avec l'axe géométrique A2 du second arbre 18.

Le tripode 12 est constitué par trois bras ou tourillons cylindriques d'axes AT 20 répartis angulairement à 120° autour de l'axe A1 de l'arbre 14.

Chaque tourillon 20 reçoit un galet 22 de profil extérieur sphérique 24 qui est monté tournant et coulissant sur le tourillon 20 avec interposition d'une série d'aiguilles 26. Chaque galet est monté tournant et son axe de rotation est confondu avec l'axe géométrique AT du bras correspondant.

Les tourillons 20 sont reliés par leur base à un moyeu central 28 dont l'alésage interne cannelé 30 est monté sur l'extrémité libre cannelée 32 du premier arbre 14 par rapport auquel le moyeu 28 est immobilisé axialement.

Comme on peut le constater à la figure 1, et comme cela sera explicité par la suite, l'axe géométrique AT, de chaque tourillon 20 n'est pas perpendiculaire à l'axe A1 du premier arbre 14.

Le barillet 16 est un élément en forme de tulipe qui comporte trois chemins de roulement répartis angulairement à 120° autour de l'axe A2 du second arbre 18 et dont chacun reçoit un galet 22. Chaque chemin de roulement comporte deux pistes parallèles 34.

Dans le mode de réalisation représenté à la figure 1, les pistes 34 sont des pistes rectilignes et l'axe longitudinal central ACR de chaque chemin de roulement est incliné par rapport à l'axe A2 du second arbre 18.

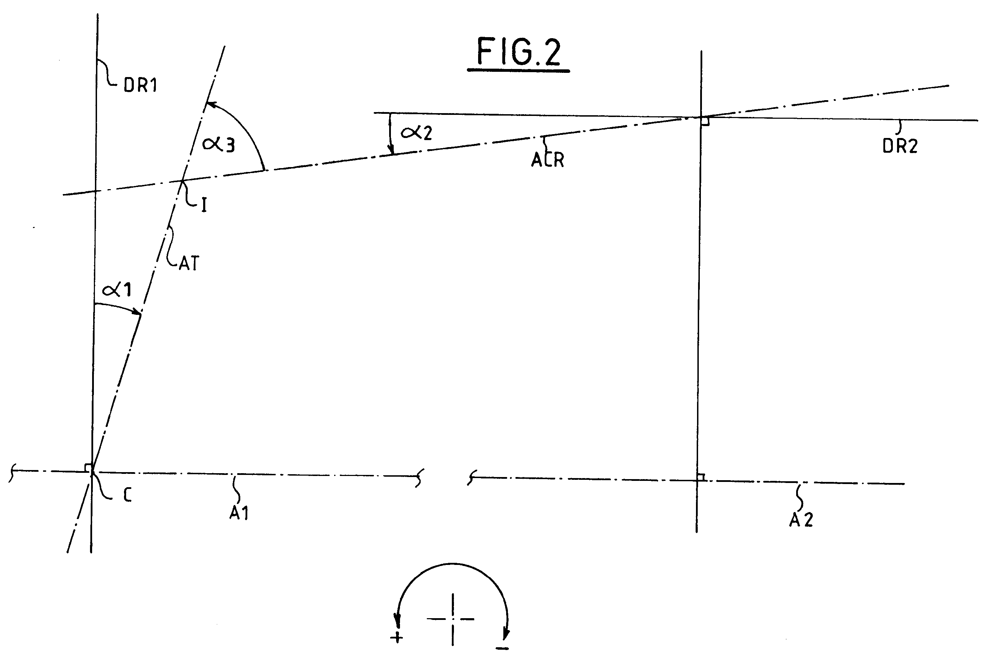

On se reportera maintenant à la figure 2 pour une description plus détaillée des caractéristiques géométriques du joint coulissant de la figure 1.

L'axe AT du tourillon 20 est contenu dans un plan, le plan de la feuille, contenant l'axe géométrique du premier arbre 14 qu'il coupe en C.

L'axe AT forme un premier angle aigu α1 par rapport à une droite de référence DR1 perpendiculaire à l'axe A1 du premier arbre 18 et contenue dans le plan contenant les axes géométriques A1 et AT.

Conformément à la convention trigonométrique adoptée à la figure 2, l'angle α1 est un angle négatif.

L'axe longitudinal central ACR du chemin de roulement associé au tourillon est incliné par rapport à l'axe géométrique A2 du second arbre 18 et donc par rapport à une droite de référence DR2 parallèle à l'axe géométrique A2.

L'axe ACR forme un deuxième angle aigu α2 par rapport à l'axe A2 et donc par rapport à la droite DR2.

L'angle α2 est un angle positif selon la convention adoptée.

L'axe ACR est contenu dans le plan, le plan de la feuille, contenant l'axe géométrique A2 du second arbre 18 et qui contient également les axes A1 et AT.

On a désigné par I le point de concours des axes AT et ACR. Dans la position alignée illustrée aux figures 1 et 2 dans laquelle les axes A1 et A2 sont confondus, l'axe AT du tourillon 20 forme un troisième angle α3 par rapport à l'axe ACR. L'angle α3 est un angle positif.

Dans le but de rendre le plus clair possible la représentation de la figure 2, les valeurs des angles aigus α1, α2 et α3 ont été augmentées par rapport à leur valeur réelle.

Conformément à l'invention la valeur des angles α1 et α2 est inférieure à 15°.

L'un des deux angles α1, α2 peut être nul.

Le troisième angle α3 est inférieur à 90°.

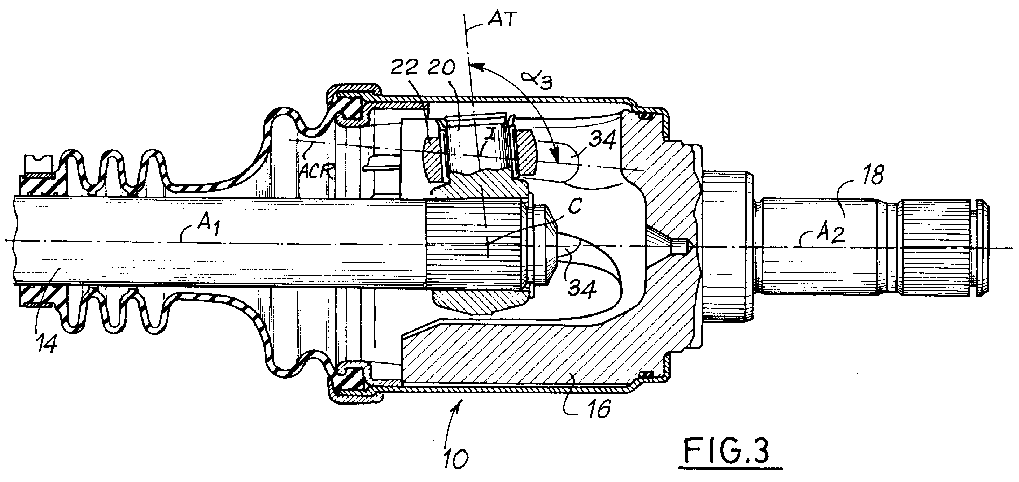

Dans le mode de réalisation illustré à la figure 3, l'angle α2 est un angle négatif au sens de la convention de représentation adoptée à la figure 2. L'angle α1 est un angle positif, tandis que l'angle α3 est un angle positif supérieur à 90°.

Au sens de l'invention, l'axe longitudinal central ACR du chemin de roulement désigne l'axe médian entre les deux pistes qui est parallèle à la ligne qui passe par les extrémités axiales opposées d'une piste 24, cette dernière n'étant pas nécessairement rectiligne mais pouvant présenter une courbure.

Un choix de valeur des angles α1 et α2 tel que leur somme soit sensiblement égale à deux fois l'angle moyen d'utilisation du joint sur un véhicule s'avère particulièrement avantageux lors des phases d'accélération du véhicule.

## Revendications

1. Joint de transmission du type coulissant dans lequel un premier élément (12) est relié à un premier arbre (14) et comporte des tourillons (20) répartis angulairement de manière régulière autour de l'axe géométrique (A1) du premier arbre (14), chaque tourillon (20) reçoit un élément de roulement (22) qui est monté tournant autour de l'axe géométrique du tourillon et coulissant sur le tourillon, l'axe géométrique (AT) du tourillon forme un premier angle aigu (α1) par rapport à une droite de référence (DR1) perpendiculaire à l'axe (A1) du premier arbre (14) et contenue dans un plan contenant les axes géométriques (A1, AT) du premier arbre (14) et du tourillon (20), et dans lequel un second élément (16) est relié à un second arbre (18) et comporte des chemins de roulement répartis angulairement de manière régulière autour de l'axe géométrique (A2) du second arbre, chaque chemin de roulement comporte deux pistes parallèles (34) entre lesquelles est reçu un élément de roulement (22), l'axe longitudinal central (ACR) du chemin de roulement contenu dans un plan contenant l'axe géométrique (A2) du second arbre (18) forme un deuxième angle aigu (α2) avec l'axe géométrique (A2) du second arbre, caractérisé en ce que la valeur de chacun desdits angles aigus (α1, α2) est inférieure à 15°.

2. Joint de transmission selon la revendication 1, caractérisé en ce que, lorsque le joint est dans sa position alignée dans laquelle les axes géométriques (A1, A2) du premier arbre (14) et du second arbre (18) sont confondus, l'axe (AT) du tourillon forme un troisième angle (α3) par rapport à l'axe longitudinal central (ACR) du chemin de roulement associé dont la valeur est différente de 90°.

## Patentansprüche

1. Verschiebbares Übertragungsgelenk, in dem ein erstes Element (12) mit einer ersten Welle (14) verbunden ist und Zapfen (20) trägt, die in regelmäßigen Winkelabständen um die geometrische Achse (A1) der ersten Welle (14) angeordnet sind, und in dem jeder Zapfen (20) ein wälzelement (22) trägt, das drehend um die geometrische Achse des Zapfens und auf dem Zapfen verschiebbar angeordnet ist, und in dem die geometrische Achse (AT) des Zapfens einen ersten spitzen Winkel (α1) gegenüber einer Bezugsgeraden (DR1) bildet, welche rechtwinklig zur Achse (A1) der ersten Welle (14) verläuft und in einer Ebene enthalten ist, welche die geometrischen Achsen (A1), (AT) der ersten Welle (14) und des Zapfens (20) umschließt, und in dem ein zweites Element (16) mit einer zweiten Welle (18) verbunden ist und Laufbahnkreise enthält, die in regelmäßigen Winkelabständen um die geometrische Achse (A2) der zweiten Welle angeordnet sind, und in dem jeder Laufbahnkreis zwei parallele Laufspuren (34) aufweist, zwischen denen ein Wälzelement (22) aufgenommen ist, und in dem die zentrale Längsachse (ACR) des in der Ebene liegenden Laufbahnkreises, welche die geometrische Achse (A2) der zweiten Welle (18) umschließt, einen zweiten spitzen Winkel (α2) bildet,
**dadurch gekennzeichnet, daß**
der Wert jedes dieser spitzen Winkel (α1), (α2) weniger als 15° beträgt.

2. Verschiebbares Übertragungsgelenk nach Anspruch 1,
**dadurch gekennzeichnet, daß**
die Achse (AT) des Zapfens, wenn sich das verschiebbare Übertragungsgelenk in seiner gefluchteten Position befindet, in der die geometrischen Achsen (A1, A2) der ersten Welle (14) und der zweiten Welle (18) zusammenfallen, einen dritten spitzen Winkel (α3) gegenüber der zentralen Längsachse (ACR) des zugeordneten Laufbahnkreises bildet, dessen Wert sich um 90° unterscheidet.

## Claims

1. Transmission joint of the sliding type in which a first element (12) is connected to a first shaft (14) and comprises trunnion journals (20) distributed angularly in a regular manner about the geometrical axis (A1) of the first shaft (14), each trunnion journal (20) receives a rolling element (22) which is mounted so as to rotate about the geometrical axis of the trunnion journal and so as to slide on the trunnion journal, the geometrical axis (AT) of the trunnion journal forms a first acute angle (α1) with respect to a reference line (DR1) perpendicular to the axis (A1) of the first shaft (14) and contained within a plane containing the geometrical axes (A1, AT) of the first shaft (14) and of the trunnion journal (20), and in which a second element (16) is connected to a second shaft (18) and comprises rolling paths distributed angularly in a regular manner about the geometrical axis (A2) of the second shaft, each rolling path comprises two parallel tracks (34) between which is accommodated a rolling element (22), the centre longitudinal axis (ACR) of the rolling path contained within a plane containing the geometrical axis (A2) of the second shaft (18) forms a second acute angle (α2) with the geometrical axis (A2) of the second shaft, characterised in that the value of each of the said acute angles (α1, α2) is less than 15°.

2. Transmission joint according to Claim 1, characterised in that, when the joint is in its aligned position in which the geometrical axes (A1, A2) of the first shaft (14) and of the second shaft (18) coincide, the axis (AT) of the trunnion journal forms a third angle (α3) with respect to the centre longitudinal axis (ACR) of the associated rolling path, the value of which is other than 90°.
